# EUROPÄISCHE PATENTSCHRIFT

(11) **EP 2 473 367 B1**
(45) Veröffentlichungstag und Bekanntmachung des Hinweises auf die Patenterteilung: **24.04.2019**
(21) Anmeldenummer: 10771315.8
(22) Anmeldetag: 19.08.2010
(51) Int. Cl.: B60K 35/00, G06F 3/048

(54) **VERFAHREN ZUM ANZEIGEN VON INFORMATIONEN BEI EINEM BILDLAUF UND VORRICHTUNG HIERFÜR**
METHOD FOR DISPLAYING INFORMATION WHILE SCROLLING AND A DEVICE THEREFOR
PROCÉDÉ D'AFFICHAGE D'INFORMATIONS LORS D'UN DÉFILEMENT ET DISPOSITIF CORRESPONDANT

(30) Priorität: 04.09.2009 DE 102009040255
(43) Veröffentlichungstag der Anmeldung: 11.07.2012
(73) Patentinhaber: Volkswagen Aktiengesellschaft, 38440 Wolfsburg (DE)
(72) Erfinder: GEISSLER, Jens, 38102 Braunschweig (DE); BURGHOFF, Christian, 38106 Braunschweig (DE); HENTSCHEL, Jenika, 38114 Braunschweig (DE); MISSAL, Markus, 38102 Braunschweig (DE); GROTE, Gerald, 38118 Braunschweig (DE); KUHN, Mathias, 14129 Berlin (DE)
(86) Internationale Anmeldenummer: PCT/EP2010/005086
(87) Internationale Veröffentlichungsnummer: WO 2011/026566

(56) Entgegenhaltungen:
- DE-A1-102007 039 442
- US-A1- 2008 204 424

## Beschreibung

Die vorliegende Erfindung betrifft ein Verfahren zum Anzeigen von Informationen auf einer Anzeigefläche, insbesondere in einem Fahrzeug, bei dem zumindest eine Teilmenge einer Liste mit mehreren Listeneinträgen angezeigt wird und sich bei einem Bildlauf durch die Liste die Teilmenge verändert, so dass Listeneinträge verschwinden und stattdessen neue Listeneinträge angezeigt werden.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Damit der Nutzer die auf einer Anzeigefläche dargestellte Information so schnell und intuitiv wie möglich erfassen kann und um ihm außerdem eine schnelle, intuitive und einfache Bedienung von Einrichtungen zu ermöglichen, deren Informationen dargestellt werden, ist aus der WO 2009/024474 A1 ein Verfahren zum Anzeigen von Informationen bekannt, bei dem ein flächiges Objekt auf einem Display graphisch dargestellt wird, wobei das graphische Objekt ein Anzeigefeld und ein Bedienfeld umfasst. Das Anzeigefeld wird auf einer Seite des flächigen graphischen Objekts und das Bedienfeld auf der anderen Seite des flächigen graphischen Objekts dargerstellt. Auf eine Eingabe mittels einer Eingabeeinrichtung werden die Graphikdaten zur Anzeige auf dem Display so verändert, dass sich das graphische Objekt bei einer perspektivischen Darstellung auf dem Display von einer Seite zu der anderen Seite dreht.

Des Weiteren ist aus der WO 2009/024400 A1 ein Verfahren zum Anzeigen von Informationen bekant, bei dem graphische Objekte, welche auf einer Anzeigefläche angezeigt werden, auf einem virtuellen, perspektivisch dargestellten Ring angeordnet dargestellt werden, wobei auf eine Eingabe mittels einer Eingabeeinrichtung eine Recheneinheit einer Benutzerschnittstelleneinrichtung die Graphikdaten für die Anzeige auf der Anzeigefläche so verändert, dass sich die Objekte auf dem virtuellen Ring karussellartig drehen. Dabei wird insbesondere mittels der Eingabeeinrichtung eine Linie auf der Anzeigefläche eingegeben und der Winkel, um den die Objekte gedreht werden, steht in einer direkten Beziehung zu der eingegebenen Länge auf der Anzeigefläche.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung nur sehr kurz die Anzeige betrachten muss, um die Bedienung durchzuführen.

Bei wechselnden Anzeigeinhalten auf der Anzeigefläche ist es insbesondere bei der Informationsdarstellung in einem Fahrzeug besonders wichtig, dass Informationsaufnahmen nicht durch den Komplexitätsgrad der Art der Informationsdarbietung erschwert wird.

Auch bei der Anzeige von Informationen in mobilen Geräten sollte die Information schnell und intuitiv erfasst werden können. Der Nutzer des mobilen Geräts nimmt nämlich die angezeigte Information häufig auf, während er andere Tätigkeiten ausführt. Dabei ergibt sich auch das Problem, dass die Anzeigefläche eines mobilen Geräts vielfach relativ klein ist, so dass es besonders wichtig ist, dass die dargestellten Informationen leicht erfassbar und ein Wechsel des Informationsinhalts leicht nachvollziehbar ist.

Die gattungsbildende US 2008/0204424 A1 beschreibt ein Verfahren für eine Bildschirmanzeige für ein mobiles Gerät. Bei dem Verfahren können auf einer Anzeigefläche mehrere Listeneinträge einer Liste angezeigt werden und der Nutzer kann durch einen Bedienvorgang die angezeigte Teilmenge der Listeneinträge verändern. Hierfür sind verschiedene Möglichkeiten für die Erfassung einer Bewegungsanfrage vorgesehen.

Der vorliegenden Erfindung liegt die Aufgabe zugrunde ein Verfahren der eingangs genannten Art bereitzustellen, bei dem der Nutzer die angezeigten Informationen während des Bildlaufs schnell und intuitiv erfassen kann.

Erfindungsgemäß wird diese Aufgabe durch ein Verfahren mit den Merkmalen des Anspruchs 1 gelöst. Vorteilhafte Aus- und Weiterbildungen ergeben sich aus den abhängigen Ansprüchen.

Das erfindungsgemäße Verfahren ist dadurch gekennzeichnet, dass
- während des Bildlaufs die Position, die Größe und die Transparenz der angezeigten Listeneinträge verändert werden, wobei
- bei dem Bildlauf eine Bildfolge angezeigt wird, bei der die Position eines Listeneintrags bei der Bewegung zu der vorherigen Position eines benachbarten Listeneintrags durch interpolierte Zwischenbilder angezeigt wird, wobei- sich bei der perspektivisch wiedergegebenen Bildfolge die Bewegung der Listeneinträge aus einer Überlagerung einer Schwenkbewegung um eine außerhalb der Anzeigefläche liegende Achse und einer senkrecht zur Anzeigefläche gerichteten Translationsbewegung ergibt, und wobei
- bei der Schwenkbewegung die Listeneinträge selbst nicht gedreht werden.

Unter einer *Liste* wird im Sinne der Erfindung ein Datenbestand verstanden, der in eine Vielzahl von Dateneinheiten einteilbar ist. Die Dateneinheiten entsprechen dann den Listeneinträgen. Die Dateneinheiten können in eine bestimmte Reihenfolge gebracht werden, so dass sie dann eine Listendarstellung bilden. Die Liste kann beispielsweise eine Vielzahl von Audio- oder Videodateien umfassen. Ferner kann sie Einträge eines Telefon- oder Adressbuchs, Einträge zu einem Menü einer hierarchischen Menüstruktur zur Bedienung einer Einrichtung oder andere Dateneinheiten betreffen, die sich in einer Liste zusammenfassen und abstrakt an Hand eines grafischen Objekts darstellen lassen.

Bei dem erfindungsgemäßen Verfahren wird bei dem Bildlauf insbesondere eine Bildfolge angezeigt, bei der die Position eines Listeneintrags bei der Bewegung zu der vorherigen

Position eines benachbarten Listeneintrags durch interpolierte Zwischenbilder angezeigt wird. Bei dem erfindungsgemäßen Verfahren werden somit vor dem Bildlauf Positionen für die angezeigten Listeneinträge definiert. Beim Bildlauf werden die Listeneinträge dann von einer Position zur nächsten Position bewegt, wobei zwischen den Positionen interpolierte Zwischenbilder angezeigt werden, so dass sich eine flüssige Animation der Listeneinträge ergibt.

Gemäß einer bevorzugten Ausbildung des erfindungsgemäßen Verfahrens wird ein Listeneintrag bei der Bewegung zu der vorherigen Position eines benachbarten Listeneintrags zunächst beschleunigt bewegt und dann abgebremst bewegt. Die Länge des Zeitintervalls, welches ein Listeneintrag benötigt, um zu der vorherigen Position eines benachbarten Listeneintrags zu gelangen, ist bei dem Bildlauf insbesondere in einem Bereich von 100 ms bis 600 ms, bevorzugt in einem Bereich von 300 ms bis 500 ms. Besonders bevorzugt ist die Länge dieses Zeitintervalls 400 ms.

Gemäß einer Ausgestaltung des erfindungsgemäßen Verfahrens werden die Position und die Größe der angezeigten Listeneinträge so verändert, dass eine perspektivisch wiedergegebene Bildfolge angezeigt wird, bei der sich in einer Bildlaufrichtung die Listeneinträge von einer Seite der Anzeigefläche von vorne zur anderen Seite der Anzeigefläche nach hinten bewegen und in der anderen Bildlaufrichtung von der anderen Seite der Anzeigefläche von hinten zu der einen Seite der Anzeigefläche nach vorne bewegen, wobei perspektivisch hintere Listeneinträge kleiner als perspektivisch vordere Listeneinträge angezeigt werden. Die eine Seite ist insbesondere die untere Seite der Anzeigefläche und die andere Seite ist insbesondere die obere Seite der Anzeigefläche.

Gemäß eine weiteren Ausgestaltung des erfindungsgemäßen Verfahrens werden die Listeneinträge als Karten dargestellt, wobei die Normale der Karte bei der perspektivisch wiedergegebenen Bildfolge fortwährend senkrecht zur Anzeigefläche ausgerichtet ist. Auf diese Weise wird der Anzeigeinhalt der Listeneinträge durch die perspektivische Darstellung nicht verzerrt wiedergegeben.

Bei der perspektivisch wiedergegebenen Bildfolge werden die Listeneinträge beispielsweise um eine außerhalb der Anzeigefläche liegende Achse geschwenkt, wobei bei der Schwenkbewegung die Listeneinträge selbst nicht gedreht werden. Die Achse ist insbesondere horizontal ausgerichtet, d.h. parallel zu der unteren und oberen Seite der Anzeigefläche 1. Ferner ist es möglich, dass sich bei der perspektivisch wiedergegebenen Bildfolge die Bewegung der Listeneinträge aus einer Überlagerung einer Schwenkbewegung um eine außerhalb der Anzeigefläche liegende Achse und einer senkrecht zur Anzeigefläche gerichteten Translationsbewegung ergibt. Auch in diesem Fall werden bei der Schwenkbewegung die Listeneinträge selbst bevorzugt nicht gedreht. Die Listeneinträge werden in diesem Fall auf einer Kurve perspektivisch von vorne nach hinten oder von hinten nach vorne geschwenkt.

Die Teilmenge erfasst bei dem erfindungsgemäßen Verfahren insbesondere zwei bis sechs Listeneinträge, bevorzugt drei oder vier Listeneinträge.

Gemäß einer weiteren Ausgestaltung des erfindungsgemäßen Verfahrens wird ein Listeneintrag der angezeigten Teilmenge der Listeneinträge markiert dargstellt. Der markiert dargestellte Listeneintrag umfasst insbesondere zumindest ein Informationselement, das farblich hervorgehoben dargestellt wird. Bei einer Auswahl des markierten Listeneintrags verschwindet die farbliche Hervorhebung. In diesem Fall wird insbesondere nur noch der ausgewählte Listeneintrag angezeigt.

Die farbliche Hervorhebung des Informationselements bei der Anzeige der Teilmenge der Liste bietet den Vorteil, dass der Nutzer z. B. beim Bildlauf durch die Listeneinträge ein wesentliches Element des Anzeigeinhalts, der beim Bildlauf für die Listeneinträge angezeigt wird, besonders schnell erfassen kann. Dem Nutzer wird auf diese Weise die Orientierung in der großen Informationsmenge, welche beim Bildlauf durch die Listeneinträge dargestellt wird, erleichtert. Ist hingegen ein Listeneintrag ausgewählt worden und wird nur noch der Anzeigeinhalt zu diesem Listeneintrag angezeigt, wird von einer farblichen Hervorhebung des Informationselements abgesehen, da eine zu große Anzahl von Farbdarstellungen bei der Anzeige die Orientierung für den Nutzer in der angezeigten Information erschweren kann. Insbesondere bei einem Einsatz des Verfahrens in einem Fahrzeug, kann die Präsentation zu vieler unterschiedlicher Farben nachteilig sein.

Das Informationselement wird während der Anzeige der Teilmenge der Liste insbesondere in einer Signalfarbe, z. B. in Rot oder Orange dargestellt. Das Informationselement kann beispielsweise Temperaturangaben betreffen. Ferner kann es Geschwindigkeitsangaben, Entfernungsangaben, Zeitangaben und/oder Verbrauchsangaben des Fahrzeugs betreffen.

Die Erfindung wird nun anhand eines Ausführungsbeispiels mit Bezug zu den Zeichnungen erläutert.
- Figur 1: zeigt schematisch ein Ausführungsbeispiel der erfindungsgemäßen Bedienvorrichtung und die Verbindung dieser Bedienvorrichtung mit anderen Einrichtungen und
- die Figur 2 bis 22: zeigen Anzeigen auf der Anzeigefläche, die von einem Ausführungsbeispiel des erfindungsgemäßen Verfahrens erzeugt werden.

Das im Folgenden beschriebene Ausführungsbeispiel betrifft den Einsatz der Bedienvorrichtung und des Verfahrens in einem Fahrzeug, insbesondere einem Kraftfahrzeug. Mittels Bedienvorrichtung und durch das Verfahren können den Fahrzeuginsassen Informationen angezeigt werden. Ferner können die Fahrzeuginsassen mittels der Bedienvorrichtung Einrichtungen des Fahrzeugs bedienen und die Anzeige steuern. Es wird jedoch darauf hingewiesen, dass die Bedienvorrichtung und das Verfahren auf gleiche Weise auch in anderen Geräten, wie zum Beispiel mobilen Geräten, eingesetzt werden können.

Die Bedienvorrichtung umfasst eine Anzeigefläche 1, die so im Innenraum des Fahrzeugs angeordnet ist, dass sie für zumindest einen Fahrzeuginsassen, insbesondere den Fahrer, gut sichtbar ist. Die Anzeigefläche 1 kann von einem Display, insbesondere einem Flüssigkristalldisplay, beliebiger Bauart bereitgestellt werden.

Die Anzeigefläche 1 ist mit einer Steuervorrichtung 2 verbunden, mit welcher Grafikdaten zur Informationsdarstellung auf der Anzeigefläche 1 erzeugbar sind, so dass eine Anzeigevorrichtung gebildet wird. Die Anzeigefläche 1 ist im hier beschriebenen Ausführungsbeispiel in drei Anzeigebereiche 5, 6 und 9 unterteilt. In den Anzeigebereichen 5 und 6 werden Statusinformationen angezeigt. Im mittleren Bereich 9 werden Informationen zu einem aktiven Kontext wiedergegeben, wie es später erläutert wird.

Ferner ist die Steuervorrichtung 2 mit einer Eingabeeinrichtung 4 verbunden, über welche der Benutzer Einrichtungen des Fahrzeugs, deren Informationen auf der Anzeigefläche 1 angezeigt werden, steuern kann. Ferner kann mittels der Eingabeeinrichtung 4 die Informationsanzeige auf der Anzeigefläche 1 gesteuert werden.

Die Eingabeeinrichtung 4 ist von der Anzeigefläche 1 abgesetzt im Fahrzeug angeordnet. Sie ist insbesondere in das Lenkrad des Fahrzeugs integriert. Ferner kann sie so in der Nähe des Lenkrads des Fahrzeugs angeordnet sein, dass sie von einer am Lenkrad befindlichen Hand eines Nutzers aus bedienbar ist.

Die Eingabeeinrichtung 4 umfasst insbesondere ein mechanisches Betätigungselement, nämlich einen Kreuzwippschalter 10. Der Kreuzwippschalter 10 zeichnet sich dadurch aus, dass er auf zwei senkrecht zueinander stehenden Achsen jeweils einen Wippschalter umfasst, der wiederum auf jeder Seite der Wippe Tastschalter aufweist. Der senkrechte Wippschalter des Kreuzwippschalters 10 umfasst einen oberen Druckpunkt 13 und einen unteren Druckpunkt 14. Der horizontale Wippschalter des Kreuzwippschalters 10 umfasst einen linken Druckpunkt 11 und einen rechten Druckpunkt 12. Das einmalige Drücken auf einen der Druckpunkte 11 bis 15 betätigt somit einen Tastschalter des Kreuzwippschalters 10. Ein solches einmaliges Drücken wird als Betätigungsvorgang aufgefasst. Des Weiteren kann der Kreuzwippschalter 10 noch einen mittleren Druckpunkt 15 aufweisen. Wenn der Nutzer auf diesen mittleren Druckpunkt 15 drückt, wird der Kreuzwippschalter 10 insgesamt hereingedrückt. Der Kreuzwippschalter 10 umfasst somit insgesamt fünf Tastschalter. Mittels der Eingabeeinrichtung 4 kann die Anzeige auf der Anzeigefläche 1 gesteuert werden, wie es später erläutert wird.

Die Steuervorrichtung 2 ist ferner mit einer Systemuhr 8 und mit einem Fahrzeugbus 7 über eine Schnittstelle gekoppelt. Über den Fahrzeugbus 7 ist die Steuervorrichtung 2 mit Fahrerassistenzsystemen des Fahrzeugs verbunden. Die Steuervorrichtung 2 erhält über den Fahrzeugbus 7 Daten dieser Fahrerassistenzsysteme und bereitet die so auf, dass diese Daten dem Fahrer bzw. den Fahrzeuginsassen über die Anzeigefläche 1 grafisch dargestellt werden. Die Steuervorrichtung 2 erzeugt hierfür Grafikdaten für auf der Anzeigefläche 1 darstellbare Objekte, welche unter anderem die Informationen der Fahrerassistenzsysteme grafisch darstellen. Ferner ist die Steuervorrichtung 2 über den Fahrzeugbus 7 mit verschiedenen Informations- und Kommunikations- sowie Unterhaltungseinrichtungen und verschiedenen Steuergeräten des Fahrzeugs verbunden. Die vielfältigen Informationen dieser Einrichtungen des Fahrzeugs werden in der Steuervorrichtung 2 aufbereitet und in Grafikdaten für eine grafische Darstellung umgewandelt. Für Animationen der grafischen Darstellung auf der Anzeigefläche umfasst die Steuervorrichtung eine Recheneinheit 3, welche beim Erzeugen von Zwischenbildern auf die Systemuhr 8 zurückgreift.

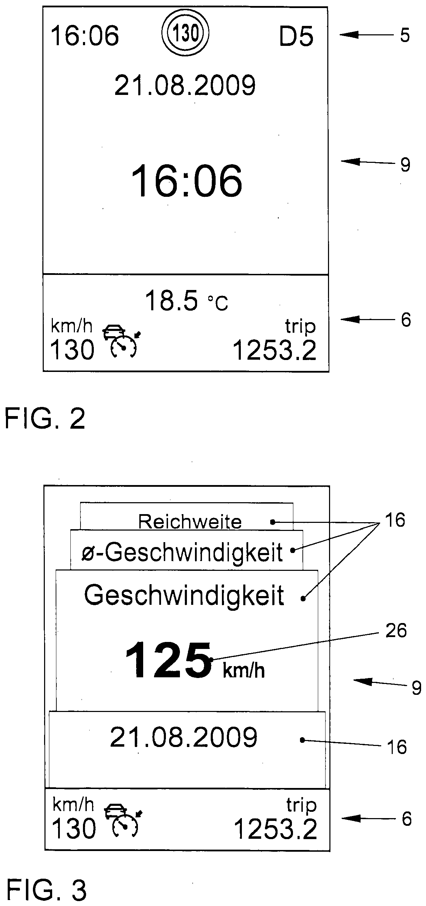

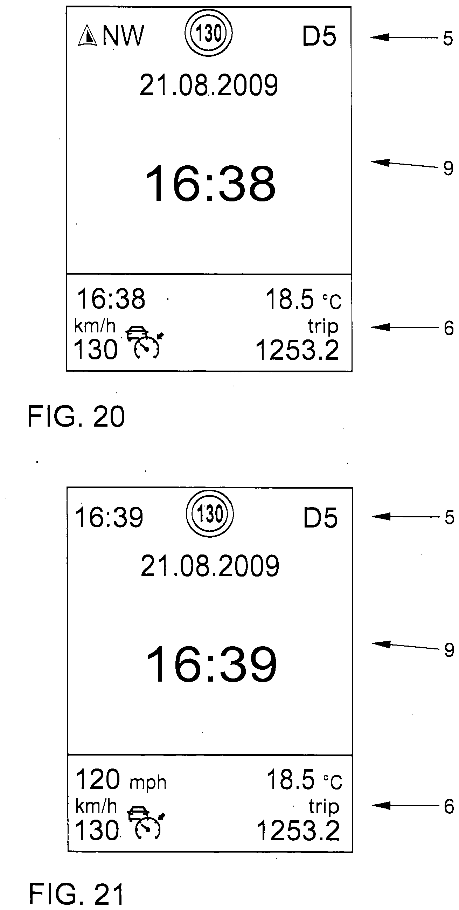

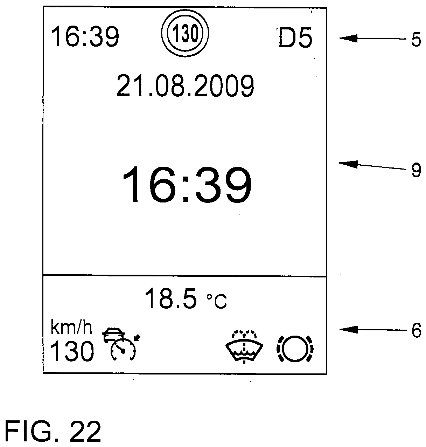

Im Folgenden wird ein Ausführungsbeispiel des erfindungsgemäßen Verfahrens, welches von der vorstehend beschriebenen Bedienvorrichtung ausführbar ist, mit Bezug zu den Figuren 2 bis 22 im Detail erläutert:
Ausgangspunkt für die im Folgenden beschriebenen Anzeigen auf der Anzeigefläche 1 ist die in Fig. 2 wiedergegebene Darstellung. Im Anzeigebereich 5 wird die aktuelle Uhrzeit und der aktuelle Gang des Getriebes des Fahrzeugs angezeigt. Des Weiteren kann optional ein von einem Fahrerassistenzsystem erfasstes Verkehrszeichen dargestellt werden. In dem in Fig. 2 gezeigten Fall wird das Verkehrszeichen für eine Geschwindigkeitsbegrenzung wiedergegeben.

Der Anzeigebereich 6 ist bei dem vorliegenden Ausführungsbeispiel durch eine horizontale Linie von dem Bereich 9 nach oben abgegrenzt. In diesem Bereich 6 wird bei der in Fig. 2 wiedergegebenen Anzeige die aktuelle Außentemperatur, die aktuelle Fahrzeuggeschwindigkeit und der Tageskilometerzähler angezeigt. Ferner können Hinweise von Fahrerassistenzsystemen in diesem Bereich 6 angezeigt werden.

Die Statusanzeigen in den Anzeigenbereichen 5 und 6 werden von der Steuervorrichtung 2 so angesteuert, dass die aktuelle Ganganzeige und die Temperaturanzeige immer sichtbar sind.

Der Anzeigebereich 9 umfasst in dem in Fig. 2 gezeigten Fall nur die aktuelle Uhrzeit und das aktuelle Datum. Der Anzeigeinhalt, welcher in dem Bereich 9 wiedergegeben wird, ist einem ausgewählten Listeneintrag einer ersten Liste zugeordnet. Um zum Anzeigeinhalt weiterer Listeneinträge dieser ersten Liste zugelangen, kann der Nutzer einen Betätigungsvorgang mittels der Eingabeeinrichtung 4 ausführen. Um zu dem Anzeigeinhalt des vorhergehenden Listeneintrags zu gelangen, drückt der Nutzer auf den Druckpunkt 13 des Kreuzwippschalters 10; um zu dem Anzeigeinhalt eines nachfolgenden Listeneintrags der ersten Liste zu gelangen, drückt der Nutzer den Druckpunkt 14 des Kreuzwippschalters 10.

Wenn der Nutzer beispielsweise auf den Druckpunkt 13 des Kreuzwippschalters 10 drückt und hierdurch den diesem Druckpunkt 13 zugeordneten Tastschalter betätigt, wechselt die Anzeige auf der Anzeigefläche 1 von der in Fig. 2 wiedergegebenen Darstellung zu der in Fig. 3 wiedergegebenen Darstellung. Wie aus Fig. 3 ersichtlich, verschwindet der Anzeigebereich 5. Ferner wird der Anzeigebereich 6 kleiner dargestellt. Der Anzeigebereich 6 enthält nicht mehr die Temperaturanzeige und die horizontale Linie, welche den Anzeigebereich 6 von dem Anzeigebereich 9 abgrenzt, ist nach unten verschoben. Der Anzeigebereich 9 wird hingegen größer dargestellt.

Im Anzeigebereich 9 werden nun die Listeneinträge 16 der ersten Liste angezeigt. In dem in Fig. 3 wiedergegebenen Beispiel werden als Teilmenge der ersten Liste insgesamt vier Listeneinträge 16 mittels eines flächigen, kartenartigen Anzeigeobjekt dargestellt. Bei einer anderen Ausgestaltung werden nur zwei oder drei Listeneinträge 16 dargestellt. Die Listeneinträge 16 geben im Wesentlichen bereits den Anzeigeinhalt wieder, welcher dem jeweiligen Listeneintrag 16 zugeordnet ist. Bei der perspektivischen Darstellung der Listeneinträge 16 ist jedoch nur ein Teil dieses Anzeigeinhalts sichtbar. Bestimmte Bereiche sind von perspektivisch weiter vorne dargestellten Listeneinträgen verdeckt bzw. sind nicht mehr im Anzeigebereich 9 enthalten. Der Anzeigeinhalt des Listeneintrags 16 der in Fig. 2 wiedergegeben wurde, ist nach der Betätigung des Tastschalters mit dem Druckpunkt 13 bei der Darstellung in Fig. 3 als unterster Listeneintrag so dargestellt, dass nur noch die Datumsangabe sichtbar ist. Die weiteren Listeneinträge 16 sind perspektivisch so angeordnet, dass sie auf einer perspektivisch nach hinten gehenden Kurve angeordnet sind. Bei dem Listeneintrag 16 der hinter dem Listeneintrag 16 mit der Datumsangabe angeordnet ist, und welchem als Anzeigeinhalt die aktuelle Fahrzeuggeschwindigkeit zugeordnet ist, ist das Wort "Geschwindigkeit" sowie die Wiedergabe der aktuellen Geschwindigkeit erkennbar. Die aktuelle Geschwindigkeit bei der Anzeige des Listeneintrags 16 ist dabei farblich hervorgehoben dargestellt; sie ist das Informationselement 26 des Listeneintrags 16. Die Angabe "125 km/h" ist insbesondere in einer Signalfarbe, z. B. in Rot, dargestellt. Die perspektivisch weiter hinten liegenden Listeneinträge 16 sind nur noch anhand der Hauptbegriffe für die Durchschnittsgeschwindigkeit und die Reichweite identifizierbar.

Durch Betätigung der Druckpunkte 13 bzw. 14 des Kreuzwippschalters 10 kann der Nutzer einen Bildlauf (Scrollen) in der ersten Liste erzeugen. Aufeinander folgend gelangt der Nutzer auf diese Weise zu folgenden Listeneinträgen 16: dem Listeneintrag mit der Datumsangabe und der Uhrzeit, wobei die Uhrzeit farblich hervorgehoben dargestellt wird; dem Listeneintrag für die Fahrzeuggeschwindigkeit, wobei die aktuelle Fahrzeuggeschwindigkeit farblich hervorgehoben dargestellt ist; dem Listeneintrag für die Durchschnittsgeschwindigkeit, wobei die aktuelle Durchschnittsgeschwindigkeit farblich hervorgehoben dargestellt ist; dem Listeneintrag für die verbleibende Reichweite, wobei die verbleibende Reichweite in Kilometern farblich hervorgehoben dargestellt ist; dem Listeneintrag für den Durchschnittsverbrauch, wobei der aktuelle Durchschnittsverbrauch in l/100 km, farblich hervorgehoben dargestellt ist; dem Listeneintrag für den aktuellen Verbrauch, wobei der aktuelle Verbrauch in l/100 km farblich hervorgehoben dargestellt ist; dem Listeneintrag für Verkehrszeichen, die von einem Fahrerassistenzsystem erfasst worden sind.

Während des Bildlaufs durch die Listeneinträge 16 der ersten Liste werden die Listeneinträge 16 perspektivisch von oben hinten nach unten vorne oder von unten vorne nach oben hinten gedreht werden. Bei der einmaligen Betätigung des Druckpunkts 13 bzw. 14 rückt die Liste dabei um einen Listeneintrag 16 weiter. Diese Veränderung der Teilmenge der Listeneinträge 16 der ersten Liste erfolgt jedoch nicht sprunghaft, sondern in einer Bildfolge (Animation), bei der mehrere interpolierte Zwischenbilder angezeigt werden. Die Animation zeichnet sich dabei dadurch aus, dass die perspektivisch dargestellte Bewegung zu Beginn eine Beschleunigung aufweist und am Ende abgebremst wird.

Im Folgenden wird im Detail erläutert, wie die Listeneinträge 16 der ersten Liste bei einem Bildlauf bewegt werden:
Bei dem Bildlauf durch die Liste wird die Teilmenge der angezeigten Listeneinträge 16 so verändert, dass Listeneinträge 16 verschwinden und stattdessen neue Listeneinträge angezeigt werden. Während des Bildlaufs wird dabei die Position, die Größe und die Transparenz der angezeigten Listeneinträge verändert. Dabei wird ein Listeneintrag 16 zu der vorherigen Position eines benachbarten Listeneintrags bewegt, wobei er bei dieser Bewegung zunächst beschleunigt bewegt wird und danach abgebremst bewegt wird. Der Bildlauf setzt sich somit aus Bildfolgen zusammen, bei denen ein Listeneintrag 16jeweils um eine Position weiterbewegt wird. Wenn ein Listeneintrag 16 bei der letzten angezeigten Position ist, verschwindet er bei der nächsten Bildfolge. Gleichzeitig taucht auf die andere Seite der Liste ein neuer Listeneintrag 16 auf.

Die Länge des Zeitintervalls, welches ein Listeneintrag 16 benötigt, um zu der vorherigen Position eines benachbarten Listeneintrags zu gelangen, liegt in einem Bereich von 100 ms bis 600 ms, insbesondere in einem Bereich von 300 ms bis 500 ms, bevorzugt ist sie 400 ms. Die Zwischenbilder für die Bildfolge zwischen zwei Positionen für einen Listeneintrag 16 werden von der Recheneinheit 3 der Steuervorrichtung 2 durch Interpolation berechnet.

Die Position und die Größe der angezeigten Listeneinträge 16 wird bei dem Bildlauf so verändert, dass eine perspektivisch wiedergegebene Bildfolge angezeigt wird, bei der sich in einer Bildlaufrichtung der Listeneinträge 16 von einer Seite der Anzeigefläche 1, zum Beispiel der unteren Seite, von vorne zur anderen Seite der Anzeigefläche 1, zum Beispiel der oberen Seite, nach hinten bewegen und in der anderen Bildlaufrichtung umgekehrt von der anderen Seite der Anzeigefläche 1, d.h. der oberen Seite, von hinten zu der einen Seite der Anzeigefläche 1, d.h. der unteren Seite, nach vorne bewegen. Wie bei der perspektivischen Darstellung üblich, werden dabei hintere Listeneinträge 16 kleiner als perspektivisch vordere Listeneinträge 16 angezeigt.

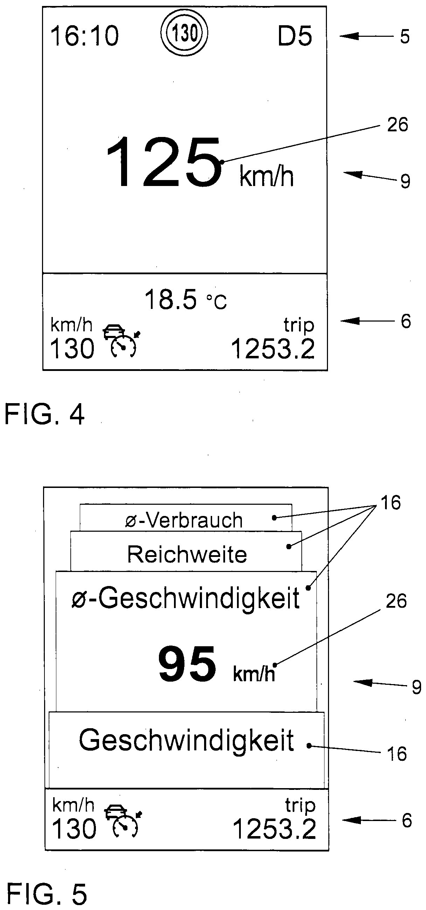

Wie aus Figur 3 und 5 ersichtlich, können die Listeneinträge 16 als Karten dargestellt werden. Die Karten werden jedoch so wiedergegeben, dass die Normale der Karte bei der perspektivisch wiedergegebenen Bildfolge senkrecht zur Anzeigefläche 1 ausgerichtet ist. Der Betrachter schaut somit immer senkrecht auf die Karte des Listeneintrags 16. Perspektivische Verzerrungen des Anzeigeinhalts des Listeneintrags 16 werden nicht erzeugt, damit der Anzeigeinhalt des Listeneintrags 16 auch während des Bildlaufs gut ablesbar bleibt.

Bei der perspektivisch wiedergegebenen Bildfolge werden die Listeneinträge 16 beispielsweise um eine außerhalb der Anzeigefläche 1 liegende Achse geschwenkt, wobei bei der Schwenkbewegung die Listeneinträge 16 selbst nicht gedreht werden. Gemäß einem anderen Beispiel kann sich die Bewegung der Listeneinträge 16 bei der Bildfolge aus einer Überlagerung einer Schwenkbewegung um eine außerhalb der Anzeigefläche 1 liegende Achse und einer senkrecht zur Anzeigefläche 1 gerichteten Translationsbewegung ergeben, wobei auch in diesem Fall bei der Schwenkbewegung die Listeneinträge 16 selbst nicht gedreht werden.

Die Transparenz der Listeneinträge 16 bzw. die Transparenz der Darstellung des Anzeigeinhalts der Listeneinträge 16 wird während des Bildlaufs so verändert, dass perspektivisch hintere Listeneinträge transparenter als perspektivisch vordere Listeneinträge 16 angezeigt werden.

Im Folgenden werden zwei Beispiele für die Positionen der Listeneinträge 16 auf der Anzeigefläche 1 gegeben. Die Bildfolge wird zwischen diesen Positionen animiert:
Jedem Listeneintrag 16 wird eine bestimmte Position auf der Anzeigefläche 1 zugeordnet. Hierfür wird im Anzeigebereich 9, in welchem die Listeneinträge 16 dargestellt werden, ein Koordinatensystem definiert, dessen Nullpunkt in der linken unteren Ecke des Anzeigebereichs 9 ist. Die x-Achse des Koordinatensystems erstreckt sich nach rechts, wobei dem rechten Rand des Anzeigebereichs 9 der Wert 1 zugeordnet wird. Die y-Achse des Koordinatensystems erstreckt sich senkrecht zur x-Achse nach oben, wobei dem oberen Rand des Anzeigebereichs 9 auch der Wert 1 zugeordnet wird. Die Position eines Listeneintrags 16 wird durch die x-y-Koordinaten des Mittelpunkts des Listeneintrags 16 angegeben.

Die x- und y-Werte geben somit relative Positionen des Anzeigebereichs 9 an. Die absoluten Positionen können dann in Abhängigkeit von der tatsächlichen Größe des Anzeigebereichs 9 berechnet werden.

Ferner wird jedem Listeneintrag 16 eine Größe bzw. eine Skalierung zugeordnet, wobei dem Listeneintrag in der markierten Position die Größe 1 zugeordnet wird. Schließlich wird jedem Listeneintrag 16 eine Transparenz zugeordnet, wobei auch in diesem Fall dem markierten Listeneintrag 16 die Transparenz 1 zugeordnet wird.

Zusätzlich zu den Positionen der angezeigten Listeneinträge 16 werden Eingangspositionen am Start und am Ende als Ziel für die verschwundenen Listeneinträge definiert. Diese haben einen Transparentwert von 0 oder sie liegen außerhalb des sichtbaren Bereichs. Durch die Anordnung, Größe und Transparenz der Listeneinträge 16 wird ein perspektivischer Eindruck erreicht. Je nach gewünschtem Tiefeneindruck können die Anordnung, Größe (Skalierung) und Transparenz modifiziert werden. Dabei ist eine Berechnung anhand von dreidimensionalen Parametern nicht erforderlich, so dass die exakte Positionierung der Listeneinträge 16 nach gestalterischen Gesichtspunkten vereinfacht wird.

Die folgende Tabelle gibt die Lage des Mittelpunkts der Listeneinträge bzw. der Start- und Ende-Positionen sowie die Transparenz und die Größe bzw. Skalierung bei einem Beispiel an, bei dem vier Listeneinträge 16 im Anzeigebereich 9 angezeigt werden:

| | x | y | Transparenz | Skalierung |
|---|---|---|---|---|
| Start | 0,5 | 0,21 | 0 | 0,78 |
| Position 1 | 0,5 | 0,23 | 1 - 0,4 | 0,80 |
| Position 2 | 0,5 | 0,32 | 1 - 0,8 | 0,9 |
| Position 3 | 0,5 | 0,46 | 1 | 1 |
| Position 4 | 0,5 | 0,86 | 1 | 1,05 |
| Ende | 0,5 | 1,06 | 1 | 1,05 |

Der jeweils markierte Listeneintrag 16 wird in diesem Fall bei der Position 3 angezeigt.

Bei der Animation werden die Listeneinträge 16 zwischen den sechs in der Tabelle angegebenen Positionen bewegt.

Des Weiteren können im Anzeigebereich 9 nur drei Listeneinträge 16 angezeigt werden. Die Positionen der Listeneinträge 16, zwischen denen sie beim Bildlauf bewegt werden, sind in der folgenden Tabelle angegeben:

| | x | y | Transparenz | Skalierung |
|---|---|---|---|---|
| Start | 0,5 | 0,24 | 0 | 0,84 |
| Position 1 | 0,5 | 0,30 | 1 - 0,8 | 0,9 |
| Position 2 | 0,5 | 0,44 | 1 | 1 |
| Position 3 | 0,5 | 0,86 | 1 | 1,05 |
| Ende | 0,5 | 1,06 | 1 | 1,05 |

In diesem Fall wird der jeweils markierte Listeneintrag 16 bei der Position 2 angezeigt.

Während des Bildlaufs durch die erste Liste durch Betätigung der Druckpunkte 13 bzw. 14 der jeweiligen Tastschalter des Kreuzwippschalters 10, befindet sich immer ein Listeneintrag in der zweiten Position von unten, bei welcher nicht nur ein Hauptbegriff oben sichtbar ist, sondern auch unterhalb davon weitere Information, die gegebenenfalls farblich hervorgehoben dargestellt wird. Bei diesem Listeneintrag 16 handelt es sich um den jeweils markierten Listeneintrag 16. Wird für ein bestimmtes Zeitintervall kein Betätigungsvorgang mittels der Eingabevorrichtung 4 ausgeführt, wird bei der ersten Liste der markierte Listeneintrag 16 automatisch ausgewählt. Die Länge des Zeitintervalls ist in einem Bereich von 1000 ms bis 5000 ms, bevorzugt 1000 ms oder 5000 ms. Dies bedeutet, dass die Wiedergabe der Listeneinträge 16 im Anzeigebereich 9 verschwindet, und statt dessen der Anzeigeinhalt des ausgewählten Listeneintrags 16 im Anzeigebereich 9 wiedergegeben wird. Der Anzeigebereich 9 verkleinert sich jedoch wieder und es wird zusätzlich der Anzeigebereich 5 dargestellt. Ferner wird der Anzeigebereich 6 wieder vergrößert dargestellt. Wird beispielsweise ausgehend von der in Fig. 3 wiedergegebenen Anzeige die Eingabeeinrichtung 4 für ein bestimmtes Zeitintervall nicht betätigt, wechselt die Darstellung auf der Anzeigefläche 1 nach Ablauf des Zeitintervalls automatisch zu der in Fig. 4 wiedergegebenen Anzeige. Wie in Fig. 4 gezeigt, werden die Anzeigebereiche 5 und 6 wieder wie in Fig. 2 dargestellt. Im Anzeigebereich 9 wird hingegen der Anzeigeinhalt des ausgewählten Listeneintrags 16 wiedergegeben. Der Hauptbegriff für diesen Listeneintrag 16 "Geschwindigkeit" verschwindet in diesem Fall. Es wird nur noch die aktuelle Fahrzeuggeschwindigkeit "125 km/h" angezeigt. Außerdem verschwindet die farbliche Hervorhebung dieses Informationselements 26, die bei den Listeneinträgen 16 noch wiedergegeben wurde, entweder sofort oder nach Ablauf eines weiteren Zeitintervalls.

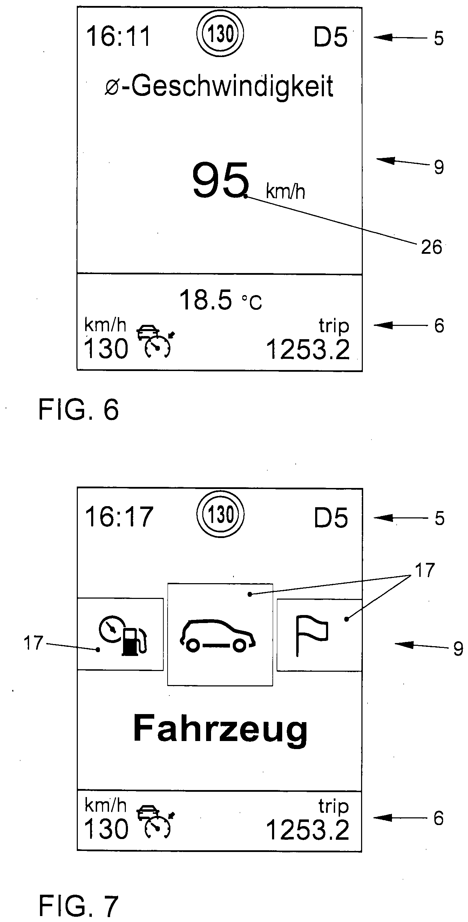

Wenn der Nutzer erneut den Druckpunkt 13 des Kreuzwippschalters 10 betätigt, wird erneut, wie in Fig. 5 gezeigt, die Liste mit den Listeneinträgen 16 wiedergegeben, wobei in der markierten Position der nächste Listeneintrag 16 mit der Durchschnittsgeschwindigkeit angezeigt wird. Wird innerhalb des Zeitintervalls die Eingabeeinrichtung 4 nicht betätigt, während der Listeneintrag 16 für die Durchschnittsgeschwindigkeit fortwährend in der markierten Position verweilt, wird dieser ausgewählt und es wird die in Fig. 6 dargestellte Anzeige wiedergegeben.

Wenn der Nutzer hingegen ausgehend von der beispielsweise in Fig. 2, Fig. 4 oder Fig. 6 wiedergegebenen Anzeige den Druckpunkt 11 bzw. 12 des Kreuzwippschalters 14 betätigt, wechselt die Anzeige zu dem Anzeigeinhalt eines Listeneintrags einer zweiten Liste, wie es im Folgenden erläutert wird:
Wird ein Druckpunkt 11 bzw. 12 des Kreuzwippschalters 10 während der Anzeige des Anzeigeinhalts, der einem Listeneintrag 16 der ersten Liste zugeordnet ist, betätigt, wechselt die Darstellung zunächst zu der Darstellung eines virtuellen, perspektivisch dargestellten Rings in dem Anzeigebereich 9, wie es in Fig. 7 gezeigt ist. Dieser virtuelle perspektivisch dargestellte Ring umfasst mehrere graphische Objekte 17, zumindest zweien dieser Objekte 17 sind Listen zugeordnet. Das Objekt 17 MFA (Multifunktionsanzeige) ist der ersten Liste zugeordnet. Des Weiteren umfasst der Ring folgende Objekte 17, denen jeweils auch eine Liste zugeordnet ist: Ein Objekt 17 betrifft das Fahrzeug selbst, insbesondere Zustandsinformationen zu dem Fahrzeug einschließlich Warnmeldungen; ein Objekt 17 betrifft das Navigationssystem des Fahrzeugs; ein Objekt 17 betrifft eine Telekommunikationseinrichtung des Fahrzeugs; ein Objekt 17 betrifft die Fahrerassistenzsysteme des Fahrzeugs; ein Objekt 17 betrifft das Radio des Fahrzeugs.

Von dem virtuellen Ring werden jeweils drei Objekte 17 angezeigt, von denen das mittlere Objekt 17 sich in der markierten Position befindet. Wenn der Nutzer den Druckpunkt 12 des Kreuzwippschalters 10 betätigt, werden die Objekte 17 entgegen dem Uhrzeigersinn um eine virtuelle senkrechte Achse um eine Position weiter gedreht, so dass das rechte Objekt 17 verschwindet, das mittlere Objekt 17 rechts dargestellt wird, das linke Objekt 17 in der Mitte dargestellt wird und als linkes Objekt 17 ein neues Objekt 17 angezeigt wird. Zu dem Objekt 17 welches sich in der markierten Position befindet, wird zusätzlich, farblich hervorgehoben, ein Schlagwort wiedergegeben. Bei dem in Fig. 7 gezeigten Fall wird als Schlagwort "Fahrzeug" angegeben. Auch in diesem Fall wird die Drehung der Objekte 17 auf dem virtuellen Ring als Animation dargestellt, bei welcher mehrere Zwischenbilder dargestellt werden. Die Animation, bei welcher ein Objekt 17 um eine Position weiter rückt, umfasst zu Beginn eine beschleunigte Bewegung des Objektes 17, welche zum Ende hin abgebremst wird.

Drückt der Nutzer aus den von der in Fig. 6 gezeigten Anzeige einmalig auf den Druckpunkt 11 bzw. 12 des Kreuzwippschalters 10, wechselt die Anzeige zu der Liste des Objekts 17, das benachbart zu dem Objekt der bisherigen Liste auf dem Ring angeordnet ist. Für den Darstellungswechsel wird die vorstehend beschriebenen Animation gezeigt, bei welcher die Objekte 17 auf dem Ring gedreht werden. Betätigt der Nutzer während dieser Animation nochmals den Druckpunkt 11 bzw. 12 des Kreuzwippschalters 10, führt dies dazu, dass der Ring um jeweils eine Position weiter gedreht wird. Durch mehrmalige Betätigung der Druckpunkte 11 bzw. 12 kann der Nutzer somit ein beliebiges Objekt 17 in die markierte Position bringen. Bei Betätigung des Druckpunkts 11 wird der Ring im entgegengesetzten Drehsinn, d. h. im Uhrzeigersinn, gedreht. Verbleibt ein Objekt 17 für ein bestimmtes Zeitintervall in der markierten Position, d. h. es wird während dieses Zeitintervalls die Eingabeeinrichtung 4 nicht betätigt, so wird dieses Objekt 17 automatisch ausgewählt. Die Länge des Zeitintervalls ist in einem Bereich von 1000 ms bis 5000 ms, bevorzugt 1000 ms oder 5000 ms.

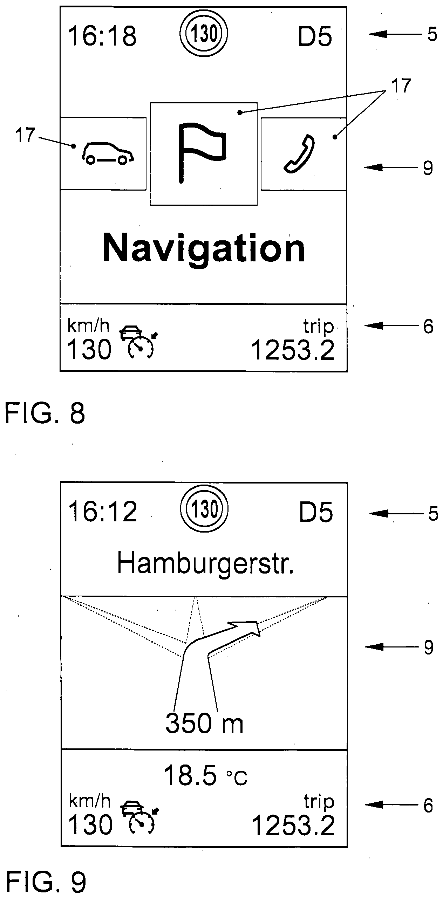

Dreht der Nutzer beispielsweise durch Betätigung des Druckpunktes 12 des Kreuzwippschalters 10 ausgehend von der in Fig. 7 dargestellten Anzeige zu der in Fig. 8 dargestellten Anzeige, bei welcher sich ein Objekt 17 für das Navigationssystem des Fahrzeugs in der markierten Position befindet, und verbleibt dieses Objekt 17 in dieser markierten Position für das vorgegebene Zeitintervall, wechselt die Anzeige nach Ablauf des Zeitintervalls in die in Fig. 9 wiedergegebene Anzeige auf der Anzeigefläche 1. In diesem Fall wird der Anzeigeinhalt eines Listeneintrags der Liste für das Navigationssystem im Anzeigebereich 9 angezeigt. Der Anzeigeinhalt umfasst den Namen der Straße, die aktuell von dem Fahrzeug befahren wird, und eine Graphik des Navigationssystems, welche dem Fahrer des Fahrzeugs Richtungshinweise für das Befahren einer vorgegebenen Route gibt.

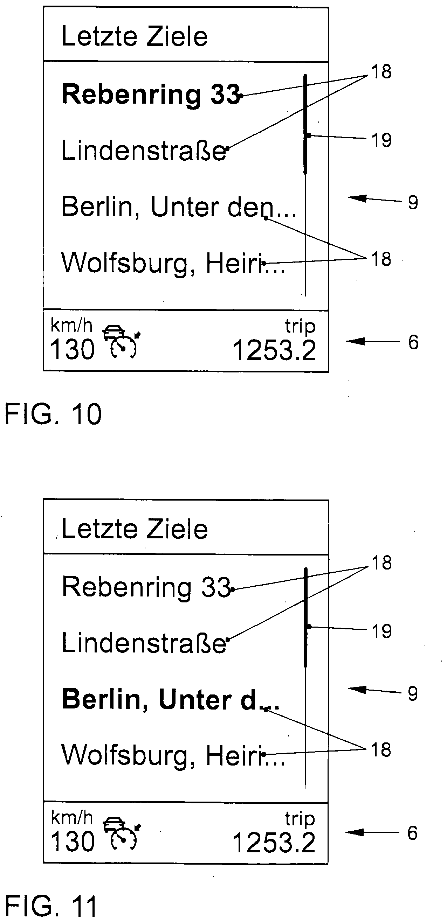

Ausgehend von der in Fig. 9 gezeigten Anzeige kann der Nutzer auch andere Ziele für das Navigationssystem auswählen. Hierfür ist dem Navigationssystem z. B. eine zweite Liste zugeordnet, welche als Listeneinträge die zuletzt angesteuerten Ziele umfasst. Wie bei der ersten Liste zu der Multifunktionsanzeige, kann der Nutzer zu dieser Liste gelangen, indem er den Druckpunkt 13 bzw. 14 des Kreuzwippschalters 10 betätigt. Betätigt der Nutzer beispielsweise den Druckpunkt 13, gelangt er zu der in Fig. 10 dargestellten Anzeige auf der Anzeigefläche 1. Wie bereits mit Bezug zu Fig. 3 bei der ersten Liste erläutert, verschwindet in diesem Fall der Anzeigebereich 5 und der Anzeigebereich 6 wird verkleinert dargestellt, so dass die Temperaturanzeige nicht mehr sichtbar ist. Der Anzeigebereich 9 für den aktuellen Kontext wird hingegen vergrößert und es wird eine Teilmenge der zweiten Liste für die letzten Ziele des Navigationssystems angezeigt. In dem in Fig. 10 gezeigten Fall werden insgesamt vier Listeneinträge 18 angezeigt, wobei ein Listeneintrag 18 markiert dargestellt ist. In dem in Fig. 10 gezeigten Fall ist der Listeneintrag "Rebenring 33" markiert angezeigt. Außerdem wird ein Bildlaufbalken 19 dargestellt, der es dem Nutzer erleichtert, sich innerhalb der zweiten Liste zu orientieren.

Die Darstellung der zweiten Liste für das Navigationssystem weist außerdem die Besonderheit auf, dass im Hintergrund weiterhin die Graphik angezeigt wird, welche dem Fahrer Hinweise zum Befahren der aktuellen Route gibt. Diese Graphik ermöglicht es dem Fahrer, weiterhin der aktuellen Route zu folgen, auch wenn beispielsweise der Beifahrer einen Bildlauf durch die letzten Ziele des Navigationssystems erzeugt.

Der Nutzer kann nun anhand der Druckpunkte 13 bzw. 14 des Kreuzwippschalters 10 durch die Listeneinträge 18 der zweiten Liste scrollen. Betätigt er beispielsweise mehrmals den Druckpunkt 14, verändert sich zunächst die angezeigte Teilmenge der zweiten Liste des Navigationssystems nicht. Der markierte Listeneintrag 18 wandert jedoch nach unten. Erst wenn der unterste Listeneintrag 18 markiert ist, verändert sich die angezeigte Teilmenge der Liste, wenn weiter nach unten gescrollt wird.

Die Art und Weise, wie ein Listeneintrag 18 der zweiten Liste ausgewählt wird, unterscheidet sich jedoch von der Weise, wie ein Listeneintrag 16 der ersten Liste ausgewählt wird. Bei der ersten Liste wurde ein Listeneintrag 16 automatisch nach Ablauf eines Zeitintervalls ausgewählt, sofern dieser während dieses Zeitintervalls in der markierten Position war. Bei den Listeneinträgen 18 der zweiten Liste ist es erforderlich, dass der Nutzer einen markierten Listeneintrag 18 durch eine Bestätigungseingabe auswählt. Diese Bestätigungseingabe wird bei dem vorliegenden Ausführungsbeispiel durch Drücken des Druckpunkts 15 des Kreuzwippschalters 10 durchgeführt. Erst wenn der Druckpunkt 15 gedrückt worden ist, wird das markierte Ziel für das Navigationssystem ausgewählt und die Anzeige wechselt wieder zurück zu der in Fig. 9 wiedergegebenen Anzeige, wobei jedoch im Anzeigebereich 9 das neue Ziel und die entsprechende Graphik für die Routenführung angezeigt wird.

Erfindungsgemäß gibt es somit zwei Arten von Listen: bei der ersten Liste wird ein markierter Listeneintrag automatisch nach Ablauf eines Zeitintervalls, in welchem der Listeneintrag fortwährend markiert war, ausgewählt; bei der zweiten Liste wird ein markierter Listeneintrag durch eine Bestätigungseingabe ausgewählt.

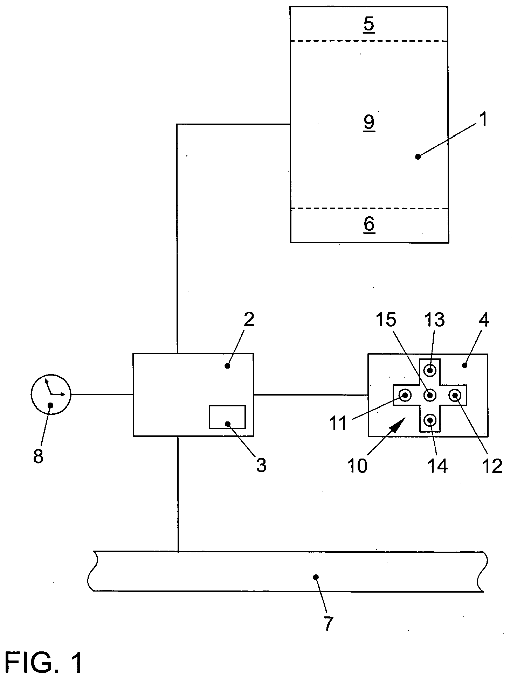

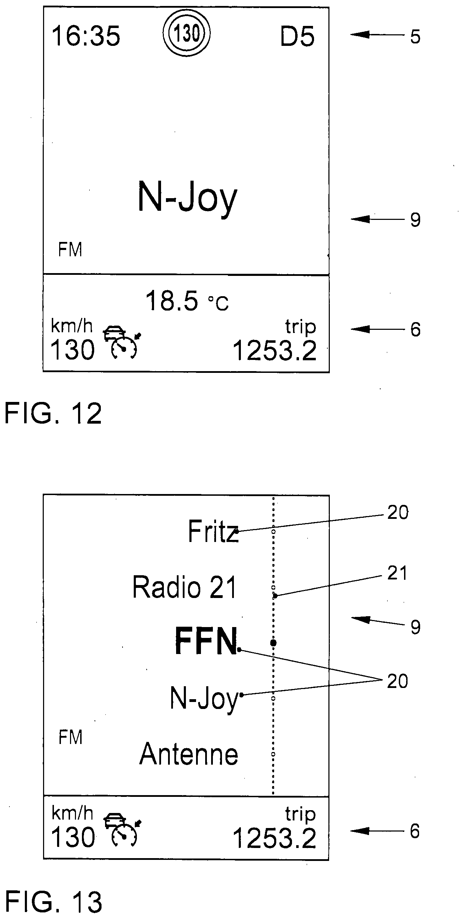

Wie bereits mit Bezug zu den Fig. 1 bis 6 erläutert, gelangt der Nutzer ausgehend von der in Fig. 9 wiedergegebenen Anzeige zu der Darstellung des virtuellen Rings mit den Objekten 17 durch Betätigung des Druckpunktes 11 bzw. 12 des Kreuzwippschalters 11. Durch mehrmalige Betätigung des Druckpunkts 11 bzw. 12 kann der Nutzer als Objekt 17 beispielsweise das Radio des Fahrzeugs auswählen. In diesem Fall gelangt man zu der in Fig. 12 gezeigten Anzeige auf der Anzeigefläche 1. Im Anzeigebereich 9 wird der aktuelle Radiosender angezeigt. Betätigt der Nutzer ausgehend von dieser Anzeige einen der Druckpunkte 13 oder 14, gelangt er zu einer weiteren Liste, die dem Radio des Fahrzeugs zugeordnet ist. Die Darstellung dieser Liste ist in Fig. 13 wiedergegeben. Erneut verschwindet der Anzeigebereich 5. Der Anzeigebereich 6 verkleinert sich und im Anzeigebereich 9 wird eine Teilmenge der Listeneinträge 20 der Liste der Radiosender, die vom Fahrzeug empfangbar sind, angezeigt. Neben den Listeneinträgen 20 für die Radiosender wird schematisch noch eine Skala 21 dargestellt.

Durch Betätigung der Druckpunkte 13 bzw. 14 des Kreuzwippschalters 10 kann der Nutzer einen Bildlauf erzeugen und einen beliebigen Listeneintrag 20 markieren. Die Art der Darstellung der Listeneinträge 20 unterscheidet sich jedoch von der Art der Darstellung der Listeneinträge 18. Ist beispielsweise bei der Anzeige gemäß Fig. 10 der oberste Listeneintrag 18 markiert und betätigt der Nutzer den Druckpunkt 14, um in der Liste nach unten zu gelangen, wird der zweite Listeneintrag 18 von oben markiert, die dargestellte Teilmenge der Liste verändert sich jedoch nicht. Bei der Liste für die Radiosender ist immer der mittlere Listeneintrag 20, d. h. bei dem in Fig. 13 wiedergegebenen Fall der Radiosender FFN, markiert. Betätigt der Nutzer in diesem Fall den Druckpunkt 14 des Kreuzwippschalters 10, wird der nächste Listeneintrag 20, d. h. bei dem in Fig. 13 gezeigten Fall der Radiosender N-Joy, markiert. Dieser Listeneintrag 20 wandert jedoch in die mittlere Stellung, der oberste Listeneintrag 20 verschwindet und unten wird ein neuer Listeneintrag 20 angezeigt. Es verändert sich somit die angezeigte Teilmenge der Liste für die Radiosender.

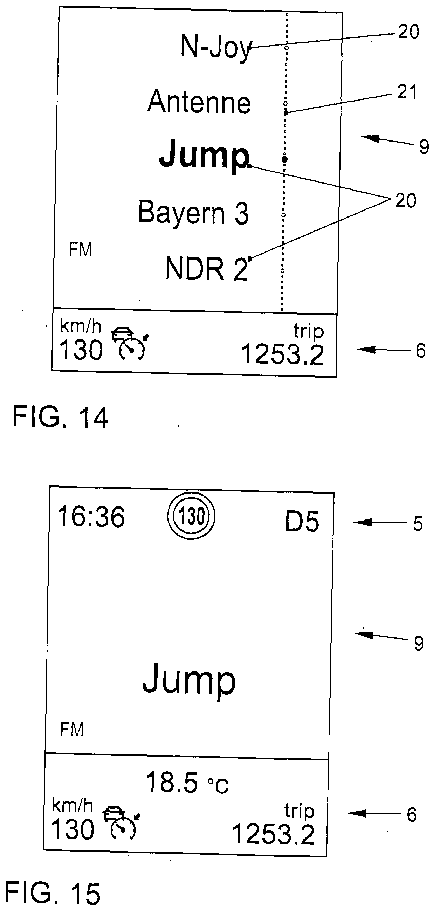

Durch Betätigung des Druckpunkts 14 kann der Nutzer beispielsweise in der Liste der Radiosender einen Bildlauf erzeugen, bis sich der Listeneintrag 20 mit dem Radiosender "Jump" in der mittleren, markierten Position befindet, wie in Fig. 14 dargestellt. Verbleibt dieser Listeneintrag 20 in der mittleren, markierten Position für ein bestimmtes Zeitintervall, wird - wie bei der ersten Liste - nach Ablauf dieses Zeitintervalls dieser Listeneintrag 20 automatisch ausgewählt und die Anzeige wechselt zu der in Fig. 15 wiedergegebenen Anzeige. Das Zeitintervall, das für die automatische Auswahl eines Listeneintrags erforderlich ist, kann insbesondere dasselbe sein, wie bei der ersten Liste für die Multifunktionsanzeige oder etwaiger weiterer Listen, bei denen die Auswahl eines Listeneintrags automatisch, d. h. ohne Betätigungsvorgang des Nutzers, erfolgt.

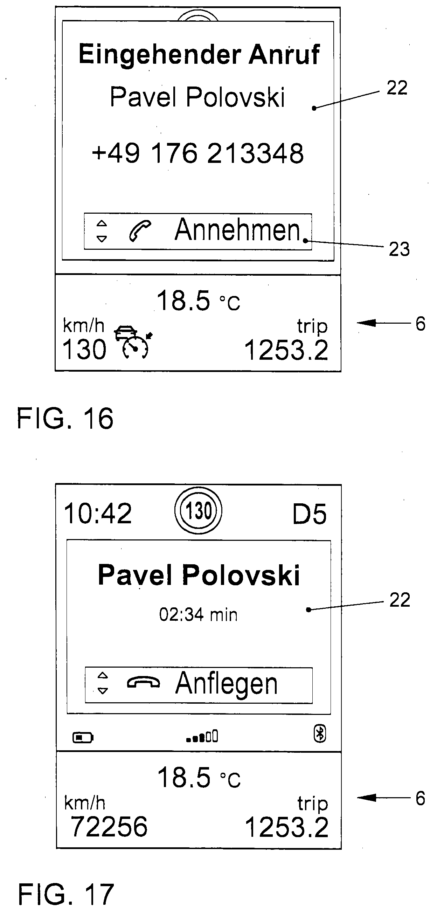

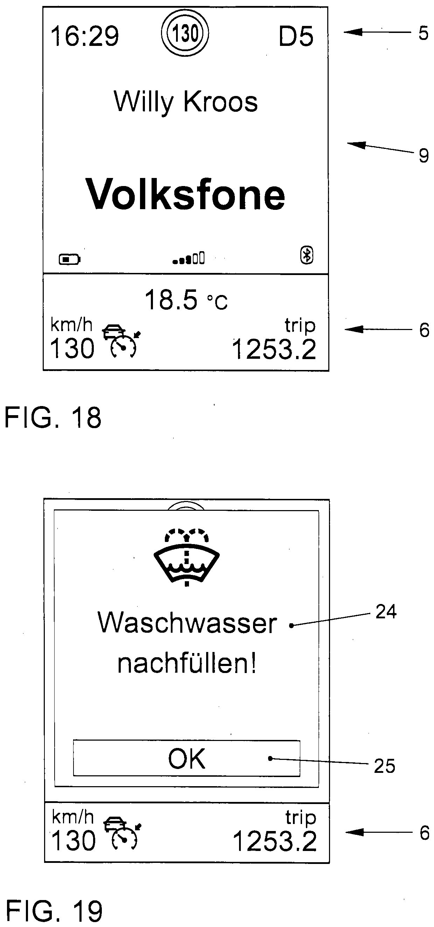

In Fig. 16 ist der Fall gezeigt, bei welcher die Telekommunikationseinrichtung des Fahrzeugs einen eingehenden Anruf erfasst. Unabhängig von der aktuellen Anzeige auf der Anzeigefläche 1, werden zunächst eventuell aktive Bedienelemente, die in Form von Schaltflächen auf der Anzeigefläche 1 angezeigt werden, geschlossen bzw. beendet. Ist beispielsweise aktuell eine Liste aufgerufen, deren Listenelemente angezeigt werden, wird die Listenanzeige zunächst geschlossen und beispielsweise zu dem zuletzt ausgewählten Listeneintrag zurückgekehrt. Danach wird, wie in Fig. 16 gezeigt, ein Fenster 22 geöffnet, welches der aktuellen Anzeige überlagert ist und welches auf den eingehenden Anruf hinweist (Popup-Darstellung). Das Fenster 22 wird so dargestellt, dass der Anzeigebereich 6 weiterhin sichtbar ist, die Anzeigebereiche 5 und 9 gegebenenfalls jedoch nur noch teilweise sichtbar sind oder als Hintergrund sichtbar sind. Der Nutzer kann nun die Schaltfläche 23 "Annehmen" durch eine Bestätigungseingabe, d. h. durch Drücken des Druckpunktes 15 des Kreuzwippschalters 10, betätigen und hierdurch den Anruf annehmen. Die Steuervorrichtung 2 überträgt daraufhin über den Fahrzeugbus 7 ein entsprechendes Signal an die Telekommunikationseinrichtung des Fahrzeugs und verändert die Anzeige auf der Anzeigefläche 1 so, dass die in Fig. 17 wiedergegebene Anzeige dargestellt wird. Ausgehend von dieser Anzeige kann der Nutzer den Anruf durch erneutes Betätigen des Druckpunktes 15 des Kreuzwippschalters 10 beenden, woraufhin die in Fig. 18 wiedergegebene Anzeige auf der Anzeigefläche 1 dargestellt wird. Es wird in diesem Fall ein Listeneintrag der Telefonliste angezeigt.

Auf die gleiche Weise wie auf einen eingehenden Telefonanruf mittels des Popupfensters 22 können dem Nutzer auch verschiedene Warnungen signalisiert werden. Eine solche Warnmeldung ist beispielsweise in Fig. 19 gezeigt. Unabhängig vom aktuellen Kontext wird ein Fenster 24 im Vordergrund dargestellt, welches auf das Nachfüllen des Waschwassers hinweist. Das Fenster 24 wird so angezeigt, dass die Anzeigebereiche 5 und 9 überhaupt nicht mehr sichtbar oder nur noch im Hintergrund sichtbar sind. Vom Anzeigebereich 6 ist nur noch der untere Bereich sichtbar. Gleichzeitig wird in dem Fenster 24 eine Schaltfläche 25 angezeigt. Bei Betätigung des Druckpunktes 15 bestätigt der Nutzer, dass er die Warnung wahrgenommen hat und das Fenster 24 wird wieder geschlossen.

Schließlich wird darauf hingewiesen, dass bei allen Animationen dieses Ausführungsbeispiels zunächst eine beschleunigte Bewegung und zum Ende hin eine abgebremste Bewegung dargestellt wird. Die Animationen können in der Regel durch Nutzeraktionen wie z. B. Eingaben über die Eingabeeinrichtung 4 abgebrochen werden. Es werden während der Animation somit keine Eingaben ignoriert. Einzige Ausnahme in dem vorliegenden Ausführungsbeispiel ist ein Kontextwechsel bei Betätigung des Druckpunktes 11 bzw. 12 des Kreuzwippschalters 10 und ein Bildlauf um eine Listenposition bei der Anzeige der Listeneinträge 20 für die Radiosender.

### Bezugszeichenliste

- 1: Anzeigefläche
- 2: Steuervorrichtung
- 3: Recheneinheit
- 4: Eingabeeinrichtung
- 5: Anzeigebereich
- 6: Anzeigebereich
- 7: Fahrzeugbus
- 8: Systemuhr
- 9: Anzeigebereich
- 10: Kreuzwippschalter
- 11-15: Druckpunkte des Kreuzwippschalters 10
- 16: Listeneintrag
- 17: graphisches Objekt
- 18: Listeneintrag
- 19: Bildlaufbalken
- 20: Listeneintrag
- 21: Skala
- 22: Fenster
- 23: Schaltfläche
- 24: Fenster
- 25: Schaltfläche

## Patentansprüche

1. Verfahren zum Anzeigen von Informationen auf einer Anzeigefläche (1), insbesondere in einem Fahrzeug, bei dem
- zumindest eine Teilmenge einer Liste mit mehreren Listeneinträgen (16) angezeigt wird und
- sich bei einem Bildlauf durch die Liste die Teilmenge verändert, so dass Listeneinträge (16) verschwinden und stattdessen neue Listeneinträge (16) angezeigt werden,
**dadurch gekennzeichnet, dass**
- während des Bildlaufs die Position, die Größe und die Transparenz der angezeigten Listeneinträge (16) verändert werden, wobei
- bei dem Bildlauf eine Bildfolge angezeigt wird, bei der die Position eines Listeneintrags (16) bei der Bewegung zu der vorherigen Position eines benachbarten Listeneintrags (16) durch interpolierte Zwischenbilder angezeigt wird, wobei
- sich bei der perspektivisch wiedergegebenen Bildfolge die Bewegung der Listeneinträge (16) aus einer Überlagerung einer Schwenkbewegung um eine außerhalb der Anzeigefläche (1) liegende Achse und einer senkrecht zur Anzeigefläche (1) gerichteten Translationsbewegung ergibt, wobei bei der Schwenkbewegung die Listeneinträge (16) selbst nicht gedreht werden.

2. Verfahren nach Anspruch 1, **dadurch gekennzeichnet, dass** ein Listeneintrag (16) bei der Bewegung zu der vorherigen Position eines benachbarten Listeneintrags (16) zunächst beschleunigt bewegt wird und dann abgebremst bewegt wird.

3. Verfahren nach einem der vorhergehenden Ansprüche, **dadurch gekennzeichnet, dass** bei dem Bildlauf die Länge des Zeitintervalls, welches ein Listeneintrag (16) benötigt, um zu der vorherigen Position eines benachbarten Listeneintrags (16) zu gelangen, in einem Bereich von 100 ms bis 600 ms liegt.

4. Verfahren nach einem der vorhergehenden Ansprüche, **dadurch gekennzeichnet, dass** die Position und die Größe der angezeigten Listeneinträge (16) so verändert werden, dass eine perspektivisch wiedergegebene Bildfolge angezeigt wird, bei der sich in einer Bildlaufrichtung die Listeneinträge (16) von einer Seite der Anzeigefläche (1) von vorne zur anderen Seite der Anzeigefläche (1) nach hinten bewegen und in der anderen Bildlaufrichtung von der anderen Seite der Anzeigefläche (1) von hinten zu der einen Seite der Anzeigefläche (1) nach vorne bewegen, wobei perspektivisch hintere Listeneinträge (16) kleiner als perspektivisch vordere Listeneinträge (16) angezeigt werden.

5. Verfahren nach Anspruch 4, **dadurch gekennzeichnet, dass** sich in einer Bildlaufrichtung die Listeneinträge (16) von der unteren Seite der Anzeigefläche (1) von vorne zur oberen Seite der Anzeigefläche (1) nach hinten bewegen und in der anderen Bildlaufrichtung von der oberen Seite der Anzeigefläche (1) von hinten zur der unteren Seite der Anzeigefläche (1) nach vorne bewegen.

6. Verfahren nach einem der vorhergehenden Ansprüche, **dadurch gekennzeichnet, dass** die Listeneinträge (16) als Karten dargestellt werden, wobei die Normale der Karte bei der perspektivisch wiedergegebenen Bildfolge fortwährend senkrecht zur Anzeigefläche (1) ausgerichtet ist.

7. Verfahren nach einem der vorhergehenden Ansprüche, **dadurch gekennzeichnet, dass** bei der perspektivisch wiedergegebenen Bildfolge die Listeneinträge (16) um eine außerhalb der Anzeigefläche (1) liegende Achse geschwenkt werden, wobei bei der Schwenkbewegung die Listeneinträge (16) selbst nicht gedreht werden.

8. Verfahren nach einem der vorhergehenden Ansprüche, **dadurch gekennzeichnet, dass** die Teilmenge zwei bis sechs Listeneinträge (16) umfasst.

9. Verfahren nach einem der vorhergehenden Ansprüche, **dadurch gekennzeichnet, dass** perspektivisch hintere Listeneinträge (16) transparenter als perspektivisch vordere Listeneinträge (16) angezeigt werden.

10. Verfahren nach einem der vorhergehenden Ansprüche, **dadurch gekennzeichnet, dass** die Listeneinträge (16) teilweise überlappend dargestellt werden.

11. Verfahren nach einem der vorhergehenden Ansprüche, **dadurch gekennzeichnet, dass** ein Listeneintrag (16) der angezeigten Teilmenge der Listeneinträge (16) markiert dargestellt wird.

12. Verfahren nach Anspruch 11, **dadurch gekennzeichnet, dass** der markiert dargestellte Listeneintrag (16) zumindest ein Informationselement (26) umfasst, das farblich hervorgehoben dargestellt wird, und dass einer Auswahl des markierten Listeneintrags (16) die farbliche Hervorhebung verschwindet.

## Claims

1. Method for displaying information on a display panel (1), in particular in a vehicle, in which
- at least one subset of a list having multiple list entries (16) is displayed and
- scrolling through the list results in the subset changing, so that list entries (16) disappear and new list entries (16) are displayed instead,
**characterized in that**
- during the scrolling, the position, the size and the transparency of the displayed list entries (16) are altered, wherein
- the scrolling results in an image sequence being displayed in which the position of a list entry (16), when moving to the previous position of an adjacent list entry (16), is displayed by interpolated intermediate images, wherein
- the image sequence reproduced in perspective results in the movement of the list entries (16) being obtained from an overlay of a swivel movement about an axis situated outside the display panel (1) and a translational movement in a direction perpendicular to the display panel (1), the list entries (16) themselves not being rotated during the swivel movement.

2. Method according to Claim 1, **characterized in that** a list entry (16) is initially moved in accelerated fashion and then moved in slowed-down fashion when moving to the previous position of an adjacent list entry (16).

3. Method according to either of the preceding claims, **characterized in that** the scrolling results in the length of the time interval that a list entry (16) needs in order to get to the previous position of an adjacent list entry (16) being in a range from 100 ms to 600 ms.

4. Method according to one of the preceding claims, **characterized in that** the position and the size of the displayed list entries (16) are altered such that an image sequence reproduced in perspective is displayed in which the list entries (16) move from the front on one side of the display panel (1) to the back on the other side of the display panel (1) in one direction of scrolling and move from the back on the other side of the display panel (1) to the front on the one side of the display panel (1) in the other direction of scrolling, list entries (16) at the back in the perspective being displayed smaller than list entries (16) at the front in the perspective.

5. Method according to Claim 4, **characterized in that** the list entries (16) move from the front on the lower side of the display panel (1) to the back on the upper side of the display panel (1) in one direction of scrolling and move from the back on the upper side of the display panel (1) to the front on the lower side of the display panel (1) in the other direction of scrolling.

6. Method according to one of the preceding claims, **characterized in that** the list entries (16) are presented as cards, wherein the normal of the card is continually oriented perpendicular to the display panel (1) for the image sequence reproduced in perspective.

7. Method according to one of the preceding claims, **characterized in that** the image sequence reproduced in perspective results in the list entries (16) being swivelled about an axis situated outside the display panel (1), the list entries (16) themselves not being rotated during the swivel movement.

8. Method according to one of the preceding claims, **characterized in that** the subset comprises two to six list entries (16).

9. Method according to one of the preceding claims, **characterized in that** list entries (16) at the back in the perspective are displayed more transparently than list entries (16) at the front in the perspective.

10. Method according to one of the preceding claims, **characterized in that** the list entries (16) are presented in partially overlapping fashion.

11. Method according to one of the preceding claims, **characterized in that** one list entry (16) of the displayed subset of list entries (16) is presented in marked fashion.

12. Method according to Claim 11, **characterized in that** the list entry (16) presented in marked fashion comprises at least one information element (26) presented in colour-highlighted fashion, and **in that** a selection of the marked list entry (16) results in the colour highlighting disappearing.

## Revendications

1. Procédé pour afficher des informations sur une surface d'affichage (1), notamment dans un véhicule, selon lequel
- au moins une quantité partielle d'une liste contenant plusieurs lignes de liste (16) est affichée et
- la quantité partielle se modifie lors d'un défilement à travers la liste, de sorte que des lignes de liste (16) disparaissent et de nouvelles lignes de liste (16) sont affichées à leur place,
**caractérisé en ce que**
- la position, la taille et la transparence des lignes de liste (16) affichées sont modifiées pendant le défilement,
- une séquence d'images étant affichée lors du défilement, avec laquelle la position d'une ligne de liste (16), lors du déplacement vers la position précédente d'une ligne de liste (16) voisine, est affichée par des images intermédiaires interpolées,
- lors de la séquence d'images à restitution en perspective, le mouvement des lignes de liste (16) résultant d'une superposition d'un mouvement de pivotement autour d'un axe qui se trouve à l'extérieur de la surface d'affichage (1) et d'un mouvement de translation orienté perpendiculairement à la surface d'affichage (1), les lignes de liste (16) elles-mêmes n'étant pas tournées lors du mouvement de pivotement.

2. Procédé selon la revendication 1, **caractérisé en ce que** lors du mouvement vers la position précédente d'une ligne de liste (16) voisine, une ligne de liste (16) est tout d'abord déplacée en étant accélérée et ensuite déplacée en étant freinée.

3. Procédé selon l'une des revendications précédentes, **caractérisé en ce que** lors du défilement, la longueur de l'intervalle de temps que nécessite la ligne de liste (16) pour passer à la position précédente d'une ligne de liste (16) voisine est compris dans une plage de 100 ms à 600 ms.

4. Procédé selon l'une des revendications précédentes, **caractérisé en ce que** la position et la taille des lignes de liste (16) affichées sont modifiées de telle sorte qu'une séquence d'images à restitution en perspective est affichée, avec laquelle les lignes de liste (16), dans un sens de défilement, se déplacent d'un côté de la surface d'affichage (1) depuis l'avant à l'autre côté de la surface d'affichage (1) vers l'arrière et, dans l'autre sens de défilement, se déplacent de l'autre côté de la surface d'affichage (1) depuis l'arrière audit côté de la surface d'affichage (1) vers l'avant, les lignes de liste (16) perspectivement en arrière étant affichées plus petites que les lignes de liste (16) perspectivement en avant.

5. Procédé selon la revendication 4, **caractérisé en ce que** dans un sens de défilement, les lignes de liste (16) se déplacent du côté inférieur de la surface d'affichage (1) depuis l'avant au côté supérieur de la surface d'affichage (1) vers l'arrière et, dans l'autre sens de défilement, du côté supérieur de la surface d'affichage (1) depuis l'arrière au côté inférieur de la surface d'affichage (1) vers l'avant.

6. Procédé selon l'une des revendications précédentes, **caractérisé en ce que** les lignes de liste (16) sont représentées sous la forme de cartes, la normale de la carte étant orientée continuellement perpendiculairement à la surface d'affichage (1) lors de la séquence d'images à restitution en perspective.

7. Procédé selon l'une des revendications précédentes, **caractérisé en ce que** lors de la séquence d'images à restitution en perspective, les lignes de liste (16) sont pivotées autour d'un axe qui se trouve à l'extérieur de la surface d'affichage (1), les lignes de liste (16) elles-mêmes n'étant pas tournées à l'extérieur de la surface d'affichage.

8. Procédé selon l'une des revendications précédentes, **caractérisé en ce que** la quantité partielle comporte deux à six lignes de liste (16).

9. Procédé selon l'une des revendications précédentes, **caractérisé en ce que** les lignes de liste (16) perspectivement en arrière sont affichées avec plus de transparence que les lignes de liste (16) perspectivement en avant.

10. Procédé selon l'une des revendications précédentes, **caractérisé en ce que** les lignes de liste (16) sont représentées en se chevauchant partiellement.

11. Procédé selon l'une des revendications précédentes, **caractérisé en ce qu'**une ligne de liste (16) de la quantité partielle de lignes de liste (16) est représentée marquée.

12. Procédé selon la revendication 11, **caractérisé en ce que** la ligne de liste (16) représentée marquée comporte au moins un élément d'information (26) qui est représenté mis en valeur colorée, et **en ce qu'**une sélection de la ligne de liste (16) marquée fait disparaître la mise en valeur colorée.
